# FASCICULE DE BREVET EUROPEEN

(11) **EP 4 078 775 B1**
(45) Date de publication et mention de la délivrance du brevet: **06.05.2026**
(21) Numéro de dépôt: 20833833.5
(22) Date de dépôt: 17.12.2020
(51) Int. Cl.: H02K 1/32, H02K 9/20, H02K 9/19

(54) **DISPOSITIF DE TRANSFORMATION D'ENERGIE**
ENERGIEUMWANDLUNGSVORRICHTUNG
ENERGY CONVERSION DEVICE

(30) Priorité: 19.12.2019 FR 1914888
(43) Date de publication de la demande: 26.10.2022
(73) Titulaire: Safran Electrical & Power, 31700 Blagnac (FR)
(72) Inventeur: BEL, François, 78400 CHATOU (FR); MIGNEAU, Maxime, 78400 CHATOU (FR)
(74) Mandataire: Atout PI Laplace
(86) Numéro de dépôt international: PCT/EP2020/086785
(87) Numéro de publication internationale: WO 2021/123002

(56) Documents cités:
- CN-A- 108 736 603
- CN-U- 204 205 841
- DE-A1- 102014 117 382
- DE-A1- 102015 223 073
- JP-A- 2003 102 147
- JP-A- 2009 118 714
- JP-A- 2013 013 182
- US-A1- 2016 344 247

## Description

La présente invention se rapporte aux dispositifs de transformation d'énergie, notamment aux dispositifs générateurs permettant de transformer une énergie mécanique fournie par un moteur en une énergie électrique. L'invention se rapporte plus particulièrement au refroidissement de telles machines électriques. Un dispositif de transformation d'énergie avec refroidissement est décrit dans le document DE102015223073A1.

Le domaine d'application de l'invention est celui de la génération d'énergie électrique à partir d'une énergie mécanique fournie par une turbine de moteur d'aéronef. Cette énergie est, par exemple, utilisée pour alimenter un réseau de bord d'un aéronef. L'invention est, toutefois, applicable à d'autres types de moteurs comme, par exemple, des turbines industrielles, ou des turbines de groupes auxiliaires de puissance ou APU acronyme de l'expression anglo-saxonne « Auxiliary Power Unit ».

Historiquement, les réseaux électriques embarqués fonctionnaient à une fréquence fixe 400Hz. Comme tous les moteurs d'avion ne fonctionnent pas à une vitesse fixe, ce type de générateur était entraîné par les moteurs au travers d'un régulateur de vitesse mécanique. Ce régulateur de vitesse permettait, à partir d'une entrée d'arbre à vitesse variable, de produire en sortie une vitesse fixe. Avec l'avènement des réseaux électriques à fréquence variable, les générateurs d'avions fonctionnent maintenant en génération sur une large plage de vitesse, typiquement d'un ratio 1:2.

L'invention s'applique tout particulièrement aux dispositifs générateurs destinés à fonctionner sur une plage de vitesse variable pour permettre de délivrer une énergie électrique de fréquence variable lorsque le dispositif générateur génère de l'énergie électrique.

Le dispositif générateur est, par exemple, une machine électrique principale d'un démarreur-générateur synchrone sans balais. La machine principale comprend un module rotor comprenant un inducteur et un module stator comprenant un induit.

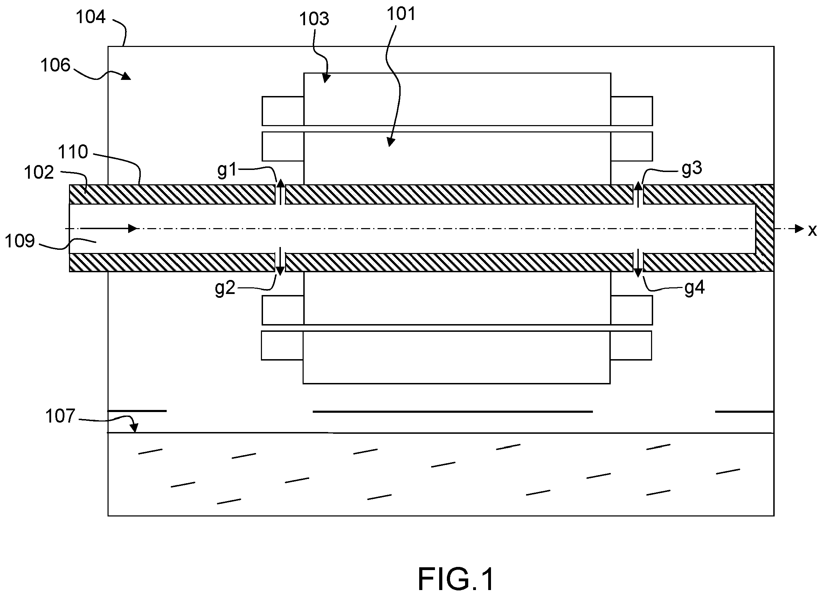

Une machine électrique principale de ce type est classiquement refroidie à l'huile comme représenté schématiquement en figure 1. Le dispositif générateur comprend un circuit de circulation d'huile permettant de générer un brouillard d'huile dans une enceinte 106 entourant radialement un arbre creux 102, le module rotor 101 et le module stator 103, afin de refroidir le module rotor 101 et le module stator 103. Le module rotor 101 est solidaire de l'arbre creux 102 et monté tournant par rapport au stator 103 et à un carter 104. Le carter 104 délimite également un réservoir 107 dans lequel retombe l'huile, par gravité, après avoir formé le brouillard d'huile. Le circuit de circulation d'huile comprend une pompe, non visible en figure 1, permettant de prélever de l'huile dans le réservoir 107 et de l'injecter, dans le sens de la flèche, dans un volume interne 109 de l'arbre creux 102 délimité par un corps 110 de l'arbre creux. L'arbre creux 102 comprend des gicleurs g1, g2, g3, g4 ménagés dans le corps 110 de l'arbre creux et assurant une communication fluidique entre le volume interne 109 de l'arbre creux 102 et l'enceinte 106 et configurés pour former un brouillard d'huile dans l'enceinte 106 à partir d'huile injecté dans le volume interne 109 de l'arbre creux 102, lors de la rotation de l'arbre 102. La pompe est classiquement volumétrique rotative et couplée mécaniquement à l'arbre creux 102 en rotation autour de l'axe longitudinal de l'arbre creux 108.

Lorsque le dispositif générateur fonctionne à vitesse variable, le débit d'huile délivré par ce type de pompe est proportionnel à sa vitesse de rotation. De la sorte, le débit d'huile injecté par la pompe dans le volume interne 109 de l'arbre creux 102 augmente lorsqu'une vitesse de rotation de l'arbre creux 102 augmente, ce qui a pour effet d'augmenter le débit d'huile injecté dans l'enceinte et donc la densité du brouillard d'huile présent dans l'enceinte 106.

Or, à basse vitesse, lorsque l'on souhaite délivrer un courant de basse fréquence, le débit d'huile doit être suffisant pour assurer le refroidissement correct du module rotor et du module stator la machine électrique principale. A haute vitesse, lorsque l'on souhaite délivrer un courant de fréquence élevé, le débit est alors en général largement supérieur au besoin.

Par ailleurs, les pertes mécaniques liées à la rotation des parties tournantes de la machine électrique principale dans le brouillard d'huile augmentent intrinsèquement avec la vitesse de rotation. Lorsque, de plus, le débit d'huile pulvérisé dans l'enceinte croît avec la vitesse, la densité du brouillard d'huile croit aussi avec la vitesse et l'effet de l'accroissement de la vitesse sur les pertes mécaniques est encore aggravé. Les pertes mécaniques réduisent alors significativement le rendement de la machine électrique. L'augmentation de la densité du brouillard peut également mener à des phénomènes de barbotage de la machine électrique principale dans l'huile qui peuvent empêcher son fonctionnement, en particulier lorsque la machine électrique principale est inclinée, c'est-à-dire lorsque son arbre est incliné par rapport un plan horizontal (lorsque l'assiette de l'aéronef est non nulle).

Une première solution pour limiter ces problèmes consiste à réduire le diamètre des parties actives (module rotor et module stator) de la machine électrique. L'inconvénient de cette solution est l'augmentation du moment de porte-à-faux de la machine électrique et de sa masse. En effet, la machine est conçue pour présenter une masse minimale. La conception électromagnétique est réalisée pour obtenir cette masse minimale et détermine, entre autres paramètres, les dimensions optimales de la machine, à savoir son diamètre et sa longueur. En réduisant le diamètre des parties actives, on s'éloigne de cette solution optimale ce qui conduit à une augmentation de la masse de la machine électrique.

Une deuxième solution consiste à limiter le débit d'huile au minimum, avec l'inconvénient d'un moins bon refroidissement à basse vitesse.

Ces deux solutions ne permettent pas la régulation du débit en fonction de la vitesse, mais permettent d'accommoder le dispositif générateur à une augmentation de la vitesse de rotation de l'arbre creux au prix d'un impact sur ses performances (masse et/ou échauffements supérieurs).

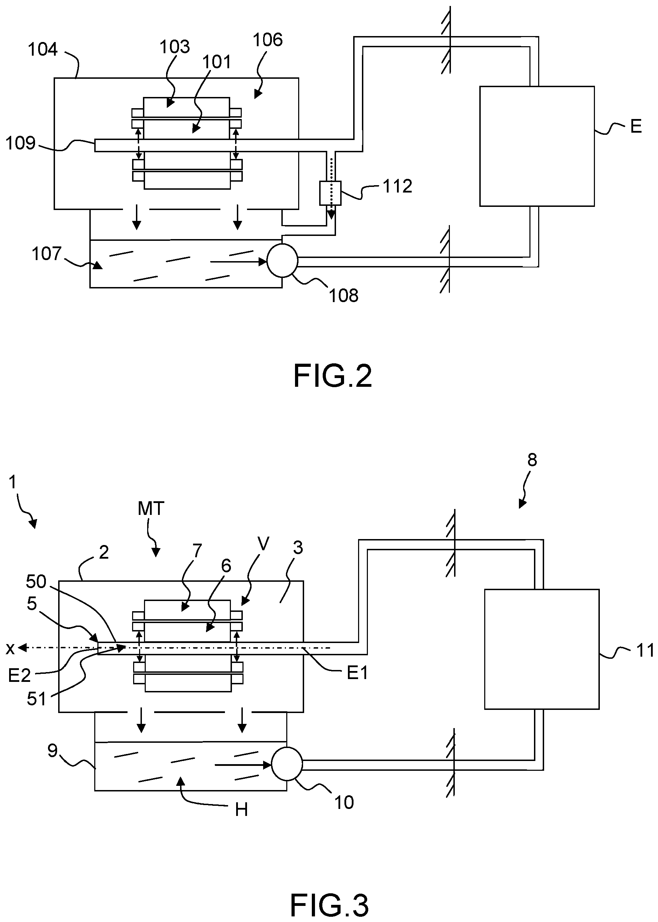

Une troisième solution représentée en figure 2, consiste à introduire, dans le circuit de circulation d'huile, une valve de régulation 112, pour limiter l'augmentation du débit d'huile pulvérisé dans l'enceinte avec l'augmentation de vitesse. Cette valve de régulation 112 prélève une partie de l'huile délivrée par la pompe 108 après refroidissement par un échangeur thermique E et avant son injection dans l'enceinte 106, pour l'envoyer directement vers le réservoir 107. Plus précisément, l'huile prélevée par la valve de régulation 112 à la sortie de la pompe 108 est injectée dans le réservoir 107 sans passer par les gicleurs g1 à g4, ce qui permet de limiter le débit d'huile injectée dans l'enceinte 106, c'est-à-dire la densité du brouillard d'huile dans la cavité 106. La valve 112 est réglée de façon à limiter l'augmentation du débit d'huile injectée dans l'enceinte 106 via les gicleurs g1 à g4 du fait d'une augmentation de la vitesse de rotation de l'arbre creux 102 ou de façon à maintenir ce débit constant.

Cette troisième solution présente toutefois un certain nombre d'inconvénients. Elle est basée sur l'introduction d'un composant supplémentaire, la valve, ce qui conduit à un coût de fabrication plus élevé et réduit la fiabilité du dispositif générateur. En effet, la valve 112 peut être sensible à la pollution de l'huile par des particules qui pourraient la bloquer et diminuer, ainsi, le débit à basse vitesse. De plus, la valve est généralement basée sur un système de piston et ressort susceptible (selon sa constante de temps) de provoquer des résonances dans le circuit d'huile en fonction des variations de débit et de pression, par exemple, lorsque la pression en sortie de pompe est pulsante. En outre, la course maximale du piston de la valve limite sa capacité de régulation du débit d'huile. Une fois la valve complètement ouverte, le débit d'huile n'est plus régulé. Par ailleurs, la valve opérant en fonction de la pression d'entrée, la pression d'entrée va quand même augmenter avec la vitesse et donc, même si la valve réduit l'augmentation du débit de l'huile passant dans la cavité 106 via les gicleurs g1 à g4, ce dernier débit augmente toujours forcément avec la vitesse. Cette solution oblige à prévoir un échangeur performant pour évacuer les pertes d'énergie à haute vitesse. D'autre part, on doit prélever davantage de puissance sur la turbine ce qui réduit le rendement de la machine électrique.

Une quatrième solution consiste à entraîner la pompe par un autre moyen que l'arbre de la machine électrique, par exemple, par un moteur de pompe dédié, ce qui permet de régler le débit d'huile délivré par la pompe de façon indépendante de la vitesse de rotation de l'arbre de la machine électrique. Cette solution présente des inconvénients manifestes de complexification de l'architecture du circuit de circulation d'huile : ajout d'un moteur, d'une régulation du moteur, de câbles supplémentaires pour le piloter, ce qui a un impact significatif sur la masse, le coût et la fiabilité du dispositif générateur.

Un but de l'invention est de limiter au moins un des inconvénients précités.

A cet effet, l'invention a pour objet un dispositif de transformation d'énergie apte à produire de l'électricité à partir d'une énergie mécanique et/ou inversement, le dispositif de transformation d'énergie comprenant :
- un carter,
- un arbre comprenant un corps définissant un volume interne, l'arbre étant destiné à tourner dans un sens prédéterminé autour d'un axe longitudinal par rapport au carter sur une plage de vitesse de rotation prédéterminée,
- un module rotor solidaire de l'arbre,
- un module stator solidaire du carter, le module rotor et le module stator comprenant un inducteur et un induit couplés magnétiquement entre eux, le carter délimitant un volume interne logeant le module rotor et le module stator et comprenant une cavité entourant le module rotor et le module stator,
- un ensemble d'au moins un gicleur traversant le corps et assurant une communication fluidique entre le volume interne et la cavité, l'ensemble d'au moins un gicleur étant configuré pour former un brouillard d'huile dans la cavité sous l'effet de la rotation de l'arbre dans la plage de vitesse de rotation, à partir d'une partie d'une huile injectée dans le volume interne de l'arbre creux, le brouillard d'huile étant destiné à venir en contact physique direct avec le module rotor et le module stator,
- un ensemble d'au moins un circuit de régulation configuré pour limiter une augmentation du débit d'huile passant du volume interne à la cavité au travers de l'ensemble d'au moins un gicleur, ladite augmentation étant due à une augmentation du débit d'huile injecté dans le volume interne, le circuit de régulation comprenant :
   - un conduit solidaire de l'arbre et comprenant une entrée communiquant avec le volume interne de sorte à recevoir, sous l'effet de la rotation de l'arbre, une autre partie de l'huile injectée dans le volume interne, le conduit conduisant l'autre partie de l'huile jusqu'à une sortie du conduit,
   - un dispositif d'évacuation configuré pour évacuer au moins une partie de l'huile sortant du conduit dans un réservoir d'huile, sans contribuer au brouillard d'huile.

Avantageusement, le conduit reçoit, sous l'effet de la force centrifuge, l'autre partie de l'huile injectée dans le volume interne, le conduit conduisant l'autre partie de l'huile jusqu'à une sortie du conduit,

Avantageusement, le dispositif comprend une pompe de circulation d'huile configurée pour prélever l'huile dans le réservoir d'huile et pour l'injecter dans le volume interne de l'arbre, la pompe étant couplée mécaniquement à l'arbre de façon à être entraînée en rotation par l'arbre de sorte qu'un débit d'huile injecté par la pompe dans le volume interne augmente lors d'une augmentation de la vitesse de rotation de l'arbre dans le sens de rotation.

Avantageusement, le conduit comprend un conduit principal entouré radialement par le module stator et configuré pour conduire l'huile qu'il reçoit, lors de la rotation de l'arbre, en translation par rapport à l'arbre selon l'axe longitudinal et/ou en rotation par rapport au corps de l'arbre autour de l'axe longitudinal, autour du volume interne.

Avantageusement, le conduit principal du conduit d'un circuit de régulation est ménagé dans le corps de l'arbre et est fermé par le module rotor.

Avantageusement, le conduit principal du conduit d'un circuit de régulation est enroulé en hélice autour de l'axe longitudinal et configuré pour aspirer l'huile en entrée du conduit principal lors de la rotation de l'arbre.

Avantageusement, les caractéristiques géométriques du conduit sont définies de façon que le conduit véhicule tout ou partie d'un surplus du débit d'huile injecté par la pompe dans le volume interne, au-delà d'un débit minimal, sur toute la plage de vitesse de rotation.

Avantageusement, le dispositif d'évacuation comprend un capot de collecte disposé dans la cavité et étant fixe par rapport au carter, le capot de collecte entourant radialement une sortie du conduit de sorte à collecter au moins une partie de l'huile sortant du conduit sous l'effet de la force centrifuge, lors de la rotation de l'arbre dans le sens de rotation.

Avantageusement, le dispositif d'évacuation comprend une ouverture d'évacuation située en regard du réservoir d'huile et permettant d'évacuer l'huile collectée par le capot, par gravité, vers le réservoir d'huile.

Avantageusement, le capot de collecte comprend une bague entourant complètement radialement la sortie et étant configurée de façon à permettre de retenir radialement et, axialement dans les deux sens, l'huile sortant du conduit, une ouverture étant ménagée dans la bague en regard du réservoir d'huile.

Avantageusement, la bague de collecte est munie d'un tuyau d'évacuation présentant une entrée entourant l'ouverture et s'étendant jusqu'à l'ouverture d'évacuation.

Avantageusement, le conduit est configuré pour limiter une augmentation du débit d'huile, passant du volume interne à la cavité au travers de l'ensemble d'au moins un gicleur, ladite augmentation étant due à une augmentation du débit d'huile injecté dans le volume interne.

D'autres caractéristiques, détails et avantages de l'invention ressortiront à la lecture de la description faite en référence aux dessins annexés donnés à titre d'exemple et qui représentent, respectivement :
[Fig.1] la figure 1, déjà décrite, représente schématiquement en coupe, selon un plan radial, une machine tournante de l'art antérieur,
[Fig.2] la figure 2 déjà décrite représente schématiquement un circuit de circulation d'huile d'un dispositif de transformation d'énergie de l'art antérieur,
[Fig.3] la figure 3 représente schématiquement un circuit de circulation d'huile d'un dispositif de transformation d'énergie selon l'invention,
[Fig.4] la figure 4 représente schématiquement, en coupe selon un premier plan radial, un exemple d'une machine électrique tournante selon l'invention,
[Fig.5] la figure 5 représente schématiquement, en coupe selon un deuxième plan radial, la machine tournante de la figure 4,
[Fig.6] la figure 6 représente schématiquement, en trait épais, un débit d'huile D1(v) sortant de l'ensemble des gicleurs en fonction de la vitesse v angulaire de l'arbre en l'absence de dispositif de régulation d'huile et, en trait fin, un exemple de débit d'huile D2(v) sortant de l'ensemble des gicleurs en fonction de la vitesse v angulaire de l'arbre en présence du dispositif de régulation d'huile.

D'une figure à l'autre, les mêmes éléments sont repérés par les mêmes références.

L'invention concerne un dispositif de transformation d'énergie comprenant une machine électrique tournante apte à transformer une énergie électrique en énergie mécanique et/ou réciproquement. L'invention concerne le domaine du refroidissement d'une telle machine électrique tournante.

Un domaine d'application de l'invention est celui de la génération d'énergie électrique à partir d'une énergie mécanique fournie par une turbine à gaz pour moteur d'aéronef. L'invention est toutefois applicable à d'autres types de moteurs comme, par exemple, des turbines industrielles, ou des turbines de groupes auxiliaires de puissance ou APU acronyme de l'expression anglo-saxonne « Auxiliary Power Unit ».

Le dispositif de transformation d'énergie est, par exemple, un démarreur générateur synchrone à rotor bobiné sans balais, c'est-à-dire comprenant une machine électrique principale, une excitatrice et un redresseur tournant. Le dispositif de transformation d'énergie comprend alors une machine électrique principale, une excitatrice et un pont redresseur tournant reliant la machine électrique principale et l'excitatrice. La machine principale comprend un module rotor comprenant un inducteur et un module stator comprenant un induit. Le module rotor de l'excitatrice forme un induit et le module stator de l'excitatrice forme un inducteur. Le dispositif de transformation d'énergie est configuré de sorte qu'un courant alternatif polyphasé est induit dans le module rotor de l'excitatrice en mode génération lors de la rotation du module rotor de l'excitatrice alors qu'un courant continu est injecté dans l'inducteur de l'excitatrice. Le courant alternatif polyphasé induit dans un rotor de l'excitatrice en mode génération est redressé par le pont redresseur tournant puis injecté dans l'inducteur de la machine principale de sorte qu'un autre courant alternatif polyphasé est induit dans l'induit de la machine principale. La fréquence du courant alternatif polyphasé induit dans l'induit de la machine principale est variable en fonction de vitesse de rotation de l'arbre.

L'invention peut concerner le refroidissement de la machine électrique principale et/ou de l'excitatrice.

Le dispositif de transformation d'énergie peut, en variante, se rapporter uniquement à la machine électrique principale ou à l'excitatrice ou à toute autre machine électrique tournante.

De façon générale, le dispositif de transformation d'énergie 1 comprend, comme visible en figure 3, une machine électrique tournante MT comprenant un module rotor 6 et un module stator 7 comprenant un inducteur et un induit couplés magnétiquement entre eux et montés tournants l'un par rapport à l'autre. L'inducteur est compris dans le module rotor et l'induit est compris dans le module stator ou inversement.

La machine tournante MT comprend un arbre 5 s'étendant longitudinalement selon un axe longitudinal x et destiné à tourner dans un sens prédéterminé autour de l'axe longitudinal. L'arbre 5 est un arbre creux. Il comprend un corps 50 délimitant un volume interne 51 s'étendant longitudinalement selon l'axe x.

Le module rotor 6 est solidaire de l'arbre 5. Le module rotor 6 et l'arbre 5 sont destinés à tourner, autour de l'axe x, par rapport au module stator 7. Des moyens d'entraînement sont avantageusement prévus pour entraîner l'arbre 5 en rotation autour de son axe x.

Le module rotor 6 entoure radialement l'arbre 5. Le module stator 7 entoure radialement le module rotor 6. Dans la suite du texte, les termes radial et axial sont définis par rapport à l'axe x.

De préférence, le module rotor 6 entoure complètement l'axe x. Autrement dit, le module rotor 6 entoure complètement l'arbre 5 de façon radiale, c'est à dire dans un plan perpendiculaire à l'axe x. De même, le module stator 7 entoure avantageusement complètement l'axe x radialement. Autrement dit, le module stator 7 entoure complètement le module rotor 6, de façon radiale, c'est à dire dans le plan perpendiculaire à l'axe x.

La machine tournante MT comprend un carter 2 fixe par rapport au module stator 7.

Le carter 2 délimite un volume interne du carter V. Le module stator 7 et le module rotor 6 sont disposés à l'intérieur du volume interne du carter V et sont entourés par une cavité 3 qui est une partie du volume interne du carter V.

La cavité 3 entoure complètement radialement la partie de l'arbre 5 située dans le volume interne du carter V délimité par le carter 2. Cette partie de l'arbre s'étend axialement depuis une position axiale E1 de l'arbre 5 jusqu'à une position axiale E2 de l'arbre 5.

Le volume interne 51 est fermé axialement au niveau de la deuxième position E2.

La cavité 3 entoure le module rotor 6 et le module stator 7.

Avantageusement, la cavité 3 entoure complètement le module rotor 6 et le module stator.

Autrement dit, la cavité 3 entoure complètement radialement et, axialement dans les deux sens, le module rotor 6 et le module stator 7. Par la cavité 3 entoure complètement radialement le module rotor 6 et le module stator 7, on entend que la cavité 3 sépare radialement le module stator 7 du carter 2.

La cavité 3 sépare radialement du carter 2, une surface externe 71 délimitant radialement le module stator 7 et située en regard du carter 2.

La cavité 3 est ainsi délimitée par le carter 2, le module rotor 6, le module stator 7 et l'arbre 5.

Le dispositif 1 comprend un circuit de circulation d'huile 8 configuré pour faire circuler l'huile en boucle fermée. Le circuit de circulation d'huile 8 comprend une pompe 10, un réservoir 9, le volume interne de l'arbre 51 et des gicleurs qui seront décrits par la suite. La pompe de circulation 10 est destinée à prélever de l'huile H dans un réservoir d'huile 9 et à l'injecter dans le volume interne 51 de l'arbre 5. L'huile H est injectée en amont de gicleurs qui seront décrits par la suite par lesquels l'huile injectée dans le volume 51, sort du volume 51 par les gicleurs, lors d'une rotation de l'arbre 5 autour de son axe longitudinal x, pour former un brouillard d'huile dans la cavité 3 Le brouillard d'huile est destiné à de venir en contact physique direct avec le module rotor 6 et le module stator 7, ce qui permet de refroidir le module rotor 6 et le module stator 7.

Avantageusement, le circuit de circulation d'huile 8 comprend un échangeur de chaleur 11 à travers lequel la pompe 10 injecte l'huile dans le volume interne 51 de l'arbre 5 de façon à refroidir l'huile puisée dans le réservoir d'huile 9 avant de l'injecter dans le volume interne. En effet, la température de l'huile formant le brouillard d'huile augmente au contact du module stator 6 et du module rotor 7 avant de retomber, sous l'effet de la gravité dans le réservoir 9.

La pompe 10 est couplée mécaniquement à l'arbre 5 de façon à être entraînée en rotation par l'arbre 5 et est configurée de sorte que le débit d'huile injecté par la pompe 10 dans le volume interne 51 augmente avec une vitesse de rotation de l'arbre creux 5 dans le sens de rotation.

La pompe 10 est classiquement volumétrique rotative et couplée mécaniquement à l'arbre creux 5 en rotation autour de l'axe longitudinal de l'arbre creux. Lorsque le dispositif générateur fonctionne à vitesse variable, le débit d'huile délivré par ce type de pompe croît avec la vitesse de rotation.

Lorsque le dispositif générateur fonctionne à vitesse variable, le débit d'huile délivré par ce type de pompe est, en première approximation, proportionnel à sa vitesse de rotation.

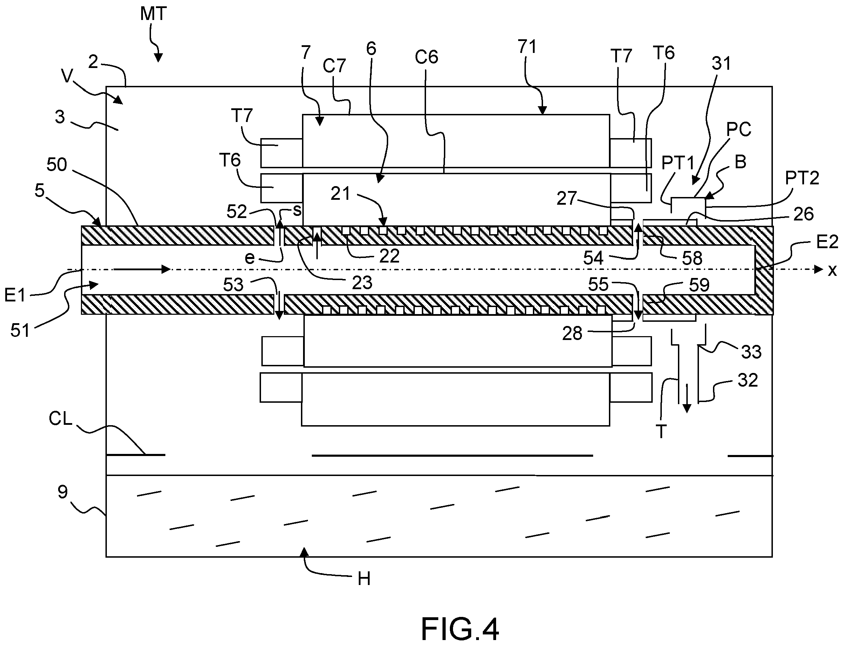

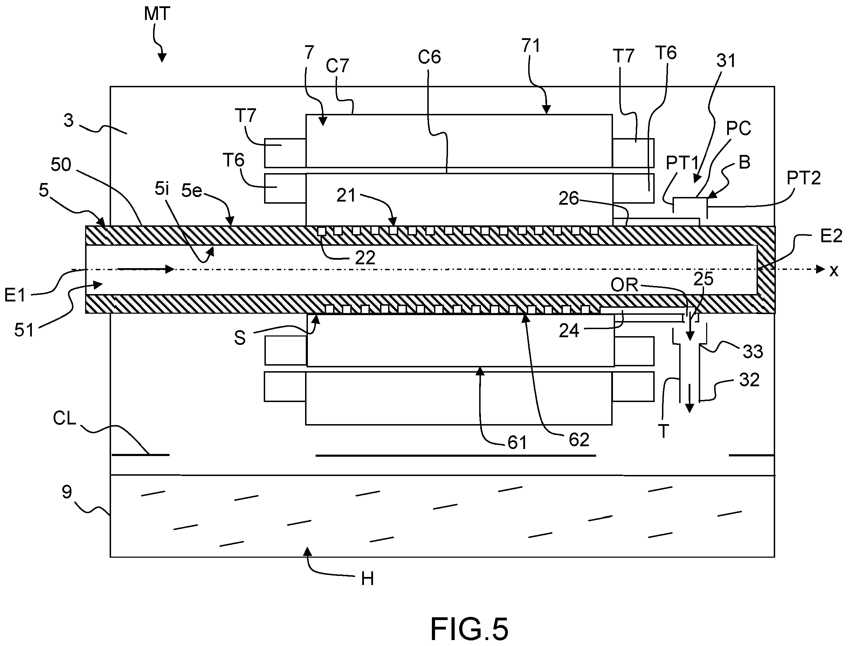

La partie du dispositif 1 située dans le carter 2 est représentée schématiquement en deux coupes radiales, en figures 4 et 5. L'arbre 5 a tourné de 90° autour de l'axe x entre les figures 4 et 5.

Une excitatrice et un pont redresseur tournant pourraient être disposés à l'intérieur du volume interne délimité par le carter 2 mais ne sont pas représentés sur cette figure.

De l'huile est injectée axialement dans le volume interne 51 au niveau d'une première position E1 selon l'axe x, dans le sens représenté par la flèche visible en figures 4 et 5, pour générer un flux d'huile selon l'axe longitudinal x. Le sens de la flèche définit un sens allant de l'amont vers l'aval.

Comme visible en figure 4, afin de permettre le refroidissement du module rotor 6 et du module stator 7, l'arbre 5 comprend un ensemble d'au moins un gicleur 52, 53, 54, 55 (quatre gicleurs 52 à 55 dans la réalisation non limitative de la figure 4) de refroidissement du module rotor 6 et du module stator 7, traversant le corps 50 pour assurer une communication fluidique entre le volume interne 51 et la cavité 3.

L'huile est injectée par la pompe 10 en amont de l'ensemble d'au moins un gicleur 52 à 55.

L'ensemble d'au moins un gicleur 52 à 55 est configuré de sorte à former un brouillard d'huile dans la cavité 3 à partir d'une partie de l'huile injectée axialement dans le volume interne 51. Autrement dit, chaque gicleur de refroidissement du module rotor 6 et du module stator 7 est configuré et disposé pour projeter une partie de l'huile injectée dans le volume interne 51,en amont du gicleur 52, 53, 54 ou 55, dans la cavité 3 de sorte à former un brouillard d'huile dans la cavité 3 destiné à venir en contact physique direct avec le module rotor 6 et le module stator 7.

Chaque gicleur de refroidissement du module rotor 6 et du module stator 7 comprend, par exemple, un conduit ménagé dans le corps 50 et traversant le corps 50 de façon à mettre le volume interne 51 en communication fluidique avec la cavité 3.

Dans l'exemple non limitatif des figures, chaque gicleur de refroidissement 52 à 55 du module rotor 6 et du module stator 7 s'étend longitudinalement de façon radiale à l'axe x.

En variante, au moins un gicleur de refroidissement 52 à 55 du module rotor 6 et du module stator 7 présente une orientation et/ou une géométrie différente, du moment qu'il débouche à la fois dans le volume interne 51 et dans la cavité 3. Au moins un gicleur de refroidissement s'étend, par exemple, longitudinalement dans un plan incliné par rapport à un plan perpendiculaire à l'axe x.

Dans la suite du texte, on entend par gicleur, un gicleur de refroidissement du module rotor 6 et du module stator 7 tel que défini précédemment. Il est à noter que le dispositif selon l'invention pourrait comprendre d'autres gicleurs aptes à refroidir d'autres parties du dispositif, comme par exemple, des roulements à billes.

Chaque gicleur comprend une entrée e par laquelle l'huile entre dans le gicleur et une sortie s par laquelle l'huile sort du gicleur et entre dans la cavité 3. Pour plus de clarté, seules l'entrée e et la sortie s du gicleur 52 sont référencées en figure 4, et uniquement en figure 4.

Le module stator 7 et le module rotor 6 comprennent chacun un corps C7, et respectivement C6, globalement cylindrique comprenant un empilement comprenant une pluralité de tôles empilées radialement. Le module rotor 6 comprend un bobinage comprenant au moins une bobine. Le bobinage comprend des têtes de bobine T6 dépassant axialement du corps C6 du module rotor 6. Le module stator 7 comprend un bobinage comprenant au moins une bobine. Le bobinage comprend des têtes de bobine T7 dépassant axialement du corps C7 du module stator 7.

Le corps C7 s'étend avantageusement sensiblement sur toute la longueur du corps C6 selon l'axe x.

Dans la réalisation particulière mais non limitative des figures, les sorties des gicleurs de refroidissement du module rotor 6 et du module stator 7 sont disposées en regard d'au moins une tête de bobine T6, T7 du module rotor 6 et/ou du module stator 7. De la sorte, les gicleurs 52 à 55 de refroidissement du module stator et du module rotor projettent l'huile directement sur au moins une tête de bobine T6 du module rotor 6 et/ou au moins une tête de bobine T7 du module stator 7. Cela permet d'assurer un refroidissement efficace du module considéré par projection de l'huile en regard des têtes de bobine.

En variante, la sortie d'au moins un gicleur est disposée en regard du carter 2.

Le brouillard d'huile formé par les gicleurs 52 à 55 permet de refroidir les modules rotor 6 et stator 7 avant de retomber, par gravité, dans un réservoir d'huile 9 délimité par le carter 2, c'est-à-dire faisant partie du volume interne du carter V. Le réservoir d'huile 9 est en communication fluidique avec la cavité 3, via d'éventuelles cloisons CL.

Le dispositif 1 est configuré de sorte que le réservoir d'huile 9 se trouve sous le module rotor 6 et du module stator 7, selon un axe vertical z, lors de l'utilisation normale du dispositif 1. La verticale est une droite alignée avec le vecteur de gravité du dispositif 1.

Selon l'invention, le dispositif 1 comprend, comme visible en figures 4 et 5, un ensemble d'au moins un circuit de régulation de la densité du brouillard d'huile, configuré pour limiter une augmentation du débit d'huile passant du volume interne 51 à la cavité 3, au travers de l'ensemble d'au moins un gicleur 52, 53, 54, 55, au-delà d'un débit d'huile minimum non nul prédéterminé Dmin, sous l'effet d'une augmentation du débit d'huile injecté par la pompe 10 dans le volume interne 51 du fait d'une augmentation de la vitesse de rotation de l'arbre 5 dans une plage de vitesse de rotation de fonctionnement prédéterminée de l'arbre. Cette plage de vitesse de fonctionnement s'étend continûment depuis une vitesse minimale Vmin prédéterminée non nulle jusqu'à une vitesse maximale Vmax.

Autrement dit, le circuit de régulation est configuré pour limiter l'augmentation de la densité du brouillard d'huile avec une augmentation de la vitesse de rotation de l'arbre. Cela permet de limiter les pertes mécaniques liées à la rotation du rotor dans le brouillard d'huile.

Le circuit de régulation comprend un conduit 21 solidaire de l'arbre 5. Le conduit 21 comprend un conduit principal 22, un conduit d'entrée 23, visible en figure 4, et un conduit de sortie 24, visible en figure 5. Le conduit principal 22, le conduit d'entrée 23 et le conduit de sortie 24 sont des portions du conduit 21.

Le conduit d'entrée 23 assure une communication fluidique entre le conduit principal 22 et le volume interne 51 de sorte que le conduit principal 22 reçoive, sous l'effet de la force centrifuge liée à une rotation de l'arbre 5 autour de son axe x dans le sens de rotation prédéterminé, une partie de l'huile injectée dans le volume interne 51. Cela permet de favoriser la dérivation de l'huile par le conduit principal 22 lorsque la vitesse augmente sans avoir à prévoir de dispositif extérieur supplémentaire, tel que, par exemple, une pompe d'aspiration de l'huile en sortie, ni de dispositif de régulation de débit en amont, tel qu'une valve de régulation.

Le conduit 21 est configuré de sorte à conduire l'huile qu'il reçoit, lors de la rotation de l'arbre 5 dans le sens de rotation, autour du volume interne 51 jusqu'à une sortie 25 d'un conduit de sortie 24.

Le conduit 21 est configuré de sorte à conduire l'huile qu'il reçoit, lors de la rotation de l'arbre 5 dans le sens de rotation, en translation par rapport au corps 50 de l'arbre 5 selon l'axe x et/ou en rotation par rapport au corps 50 de l'arbre 5 autour de l'axe x.

Le circuit de régulation comprend un dispositif d'évacuation configuré pour évacuer l'huile sortant du conduit de sortie 24, dans le réservoir d'huile 9 sans contribuer de brouillard d'huile.

Le dispositif d'évacuation comprend un capot de collecte 31 fixe par rapport au carter 2. Le capot de collecte 31 est disposé dans cavité 3.

Le capot de collecte 31 entoure au moins radialement une sortie 25 du conduit de sortie 24 de sorte à collecter au moins une partie de l'huile sortant du conduit 21 sous l'effet de la force centrifuge, lors de la rotation de l'arbre 5 dans le sens de rotation.

Avantageusement, le capot 31 est configuré et disposé de façon à retenir radialement et, de préférence, mais non nécessairement axialement dans un sens ou dans les deux sens, le flux d'huile éjecté à la sortie 25 du conduit de sortie 24. L'huile se dépose sur les parois du capot 31.

Le capot est configuré de façon que l'huile retenue par le capot 31 soit collectée, sous l'effet de la gravité, dans le réservoir d'huile 9. Ainsi, l'huile collectée par le capot 31 est refoulée directement vers le réservoir d'huile 9 par gravité, sans former de brouillard d'huile dans la cavité 3.

Le dispositif d'évacuation comprend, par exemple, une ouverture d'évacuation 32 disposée en regard du réservoir d'huile 9 de façon à évacuer l'huile collectée par le capot 31, sous l'effet de la gravité, dans le réservoir d'huile 9. Ainsi, l'huile qui se dépose sur les parois du capot 31, ruisselle vers l'ouverture d'évacuation 32 et tombe, au travers de l'ouverture 32, dans le réservoir d'huile 9 sous l'effet de la gravité.

Avantageusement, l'ouverture d'évacuation32 et configurée et disposée de façon que l'huile sortant par l'ouverture 32 ne soit pas projetée directement sur le module rotor 6.

De façon plus avantageuse, l'ouverture d'évacuation 32 est configurée et disposée de façon que l'huile sortant par l'ouverture 32 ne soit pas susceptible de venir en contact avec le module rotor 6. Ainsi, l'ouverture 32 est configurée et disposée de façon que l'huile sortant de l'ouverture 32 ne soit pas projetée directement sur le module rotor 6 et ne soit pas susceptible d'être projetée indirectement sur le module rotor 6, par exemple par projection sur une surface proche du module rotor 6.

Avantageusement, l'ouverture d'évacuation 32 est située à une distance radiale de l'axe x supérieure ou égale à la distance radiale la plus élevée séparant radialement les têtes de bobines T6 du module rotor 6 ou le module rotor 6 de l'axe avantageusement, l'ouverture d'évacuation 32 est située à une distance radiale de l'axe x supérieure ou égale à la distance radiale la plus élevée séparant radialement les têtes de bobines T7 ou le module rotor 6 de l'axe x.

Le capot 31 entoure complètement l'arbre 5 radialement et est fixe par rapport au carter 2. Il empêche donc l'éjection, vers le module rotor et le module stator, d'au moins une partie de l'huile véhiculée par le conduit de sortie 23 en rotation autour de l'axe x avec l'arbre 5 sous l'effet de la force centrifuge. L'huile ainsi ralentie ne présente plus l'énergie cinétique nécessaire pour former le brouillard d'huile et est refoulée directement vers le réservoir 9 sous l'effet de la gravité, sans former le brouillard d'huile.

Ainsi, le circuit de régulation selon l'invention permet de dériver au moins une partie d'un surplus d'huile fournie par la pompe à haute vitesse et de le refouler directement dans le réservoir 9 sans former de brouillard d'huile. Cela permet de limiter l'augmentation des pertes mécaniques à haute vitesse.

L'implémentation de la solution est simple car elle ne consiste qu'en l'ajout d'un ensemble d'au moins un conduit sur l'ensemble rotor (module rotor et arbre) et du dispositif de collecte. Par ailleurs, cette solution est relativement fiable et bon marché car elle ne nécessite pas l'ajout de composants présentant des pièces mobiles, tels que des valves de régulation. Cette solution permet, par le choix de la configuration du conduit, d'influer progressivement sur toute la plage de vitesse et de réguler précisément les débits d'huile sur toute la plage de vitesse de fonctionnement. Cette solution est moins sensible à une pollution de l'huile qu'une solution basée sur une ouverture/fermeture d'un orifice. Cette solution n'entraîne pas de risques de résonance avec le circuit d'huile.

Dans la réalisation particulière des figures 4 et 5, le conduit de sortie 23 est une rainure, visible en figure 5, ménagée sur la surface externe S de l'arbre creux 5. La rainure 24 est fermée par un capot de fermeture 26 fixe par rapport à l'arbre 5 de façon que l'huile injectée par le conduit principal 22 dans la rainure 24 reste confinée dans la rainure jusqu'à la sortie 25 de la rainure 24.

Dans la réalisation non limitative de la figure 5, la rainure 24 s'étend linéairement selon l'axe x. En variante, la rainure 24 pourrait être courbe.

Des conduits 27, 28 sont ménagés dans le capot de fermeture 26. Ces conduits traversent radialement le capot de fermeture 26 et sont ouverts en regard de premiers conduits 58, 59, ménagés dans le corps 50 de l'arbre 5 et traversant radialement le corps 50, et en regard de la cavité 3.

Le conduit 27 et le premier conduit 58 forment le gicleur 54 et le conduit 28 et le premier conduit 59 forment le gicleur 55, dans la réalisation non limitative de la figure 5.

Dans la réalisation non limitative des figures 4 et 5, le capot de fermeture 26 entoure complètement radialement l'arbre creux 5. Le capot de fermeture 26 comprend une ouverture radiale OR, visible en figure 5, située en regard d'une extrémité longitudinale de la rainure 24 de sorte à former la sortie 25 de la rainure 24.

Il est à noter que la rainure 24 est située dans un plan radial distinct des gicleurs 54 et 55. Ces plans formant un angle de 90° autour de l'axe x dans l'exemple des figures 4 et 5.

De façon plus générale, la rainure 24 est avantageusement disposée dans un plan radial distinct de tout gicleur situé dans le même plan perpendiculaire à l'axe x que la rainure. Cela permet d'éviter une communication fluidique entre le conduit 11 et les gicleurs 54 et 55.

Le capot de collecte31 peut être monté sur le carter 2 ou sur un boîtier renfermant un roulement billes permettant de guider l'arbre 5 en rotation autour de l'axe x par rapport au carter 2.

Dans la réalisation non limitative de la figure 5, le capot de collecte 31 comprend une bague B entourant complètement radialement l'arbre 5 en regard de la sortie 25 de la rainure 24, ou plus généralement de la sortie du conduit de sortie. La bague B est fixe par rapport au carter 2.

Il existe un jeu fonctionnel entre le capot de collecte 31 et l'arbre 5 de façon permettre la rotation de l'arbre par rapport au capot de collecte 31. La taille du jeu est avantageusement la plus faible possible pour permettre cette rotation tout en limitant au maximum l'éjection de l'huile par le jeu fonctionnel. En variante, la distance radiale minimale entre le capot de collecte 31 et l'arbre 5 est supérieure au jeu fonctionnel et est choisie en fonction d'un compromis coût / performances.

La bague B est configurée et disposée de façon à retenir radialement et axialement dans les deux sens, l'huile sortant par la sortie 25. L'huile vient se déposer sur les parois PC, PT1, PT2 de la bague et ruisselle jusqu'à une ouverture 33, ménagée dans la bague B, sous l'effet de la gravité.

La bague B comprend, par exemple, une paroi PC globalement cylindrique entourant complètement l'arbre 5 de façon radiale en regard de la sortie 25 et deux parois transverses PT1, PT2 sensiblement perpendiculaires à l'axe x. La sortie 25 est comprise entièrement entre les deux parois transverses PT1 et PT2. La paroi cylindrique PC est percée de l'ouverture 33.

Avantageusement, la bague B est munie d'un tuyau d'évacuation T entourant entièrement l'ouverture 33 et étant allongé depuis l'ouverture 33 jusqu'à l'ouverture d'évacuation 32 située en regard du réservoir d'huile 9. Le tuyau d'évacuation T permet de contenir l'huile provenant de l'ouverture d'évacuation 32 dans un volume tubulaire délimité par le tuyau d'évacuation avant son évacuation par l'ouverture d'évacuation 32. L'huile ruisselant sur la bague vient ruisseler le long du tuyau d'évacuation pour être évacuée directement dans le réservoir sans contribuer à créer le brouillard d'huile. Le tuyau 31 permet également de guider, directement vers le réservoir d'huile 9, une partie de l'huile qui est expulsée par la sortie du conduit, directement en regard de l'ouverture 32 pendant la rotation de l'arbre afin qu'elle ne contribue pas au brouillard d'huile.

Le tuyau T est relié à la bague B.

Le tuyau T est solidaire de la bague B. Il est monobloc avec la bague. En variante, le tuyau est fixé à la bague B.

Dans une autre variante, le tuyau T présente une extrémité fixée à la bague B et une extrémité mobile par rapport à la bague B, par exemple lorsque le tuyau T est flexible.

Le tuyau T est tubulaire, par exemple, sensiblement cylindrique. En variante, le tuyau s'élargit depuis l'ouverture 33 vers l'ouverture d'évacuation 32 ou l'inverse. Il est, par exemple, globalement tronconique. L'intérêt d'un élargissement du tuyau depuis l'ouverture 33 ou depuis un plan perpendiculaire à l'axe du tuyau et situé entre les plans définis par l'ouverture 32 et par l'ouverture 33 jusqu'à l'ouverture d'évacuation 32 est d'assurer l'évacuation de l'huile vers le réservoir même en cas de tangage ou de roulis de la machine et donc de l'axe x. L'intérêt d'un rétrécissement du tuyau depuis l'ouverture 33 ou depuis un plan perpendiculaire à l'axe du tuyau et situé entre les plans définis par l'ouverture d'évacuation 32 et par l'ouverture 33 est de bien canaliser le jet d'huile sortant de l'ouverture d'évacuation 32 pour bien le diriger vers le réservoir d'huile ou le diriger à un endroit précis du réservoir d'huile. La forme du tuyau T est adaptée en fonction du besoin.

Le mode de réalisation des figures 4 et 5 n'est pas limitatif, d'autres modes de réalisation sont bien sûr envisageables. Par exemple, le capot 31 est dépourvu du tuyau 32. L'ouverture d'évacuation 32 est alors l'ouverture 33.

Dans la réalisation des figures, le conduit 21 comprend le conduit principal 22, le conduit d'entrée 23 et le conduit de sortie 24. En variante, le conduit d'entrée et/ou le conduit de sortie est une portion du conduit principal.

Le module rotor 6 est délimité radialement (par rapport à l'axe longitudinal x) par une surface externe 61 tournée vers le module stator 7, c'est-à-dire en regard du module stator 7, et une surface interne 62 tournée vers l'arbre 5, c'est-à-dire en regard de l'arbre 5. Ces surfaces 61 et 62 sont des surfaces du corps C6 du module rotor 6.

Dans la réalisation avantageuse des figures 4 et 5, le conduit principal 22 est entièrement situé entre une surface interne 5i du corps 50 de l'arbre 5, la surface interne 5i étant tournée vers le volume libre 51 et délimitant le volume libre 50, et la surface externe 61 du module rotor 6. La circulation de l'huile dans le conduit principal 22 assure ainsi une double fonction de régulation du débit de l'huile sortant des gicleurs 52 à 55 et de refroidissement du module rotor 6. La solution proposée constitue donc un moyen de refroidissement additionnel du module rotor 6, ce qui permet d'améliorer les performances du dispositif de transformation d'énergie 1. Le gain sur les performances d'énergie est d'autant plus important que le conduit principal 22 en configuré pour circuler l'huile sur une grande distance en translation par rapport à l'arbre 5 selon l'axe x et/ou en rotation par rapport au corps de l'arbre 5 autour de l'axe x.

Dans la réalisation avantageuse des figures 4 et 5, le conduit principal 22 est ménagé dans le corps 50 de l'arbre 5 et est fermé par le module rotor 6, et plus précisément par la surface interne 62 du module rotor 6. Cette solution présente l'avantage d'être facile à réaliser, en particulier lorsque l'arbre 5 présente une structure monobloc, le conduit 21 pouvant être facilement pratiqué, par exemple par usinage, à la surface du corps 50 de l'arbre 5. Par ailleurs, l'huile conduite dans le conduit 21 vient en contact direct avec la surface interne 62 du rotor 6 ce qui permet d'assurer un bon refroidissement du rotor 6. Cette solution présente également l'avantage d'être compacte. Elle ne nécessite pas l'ajout d'une pièce dédiée, dans laquelle serait ménagé le conduit.

En variante, le conduit principal 22 est ménagé à l'intérieur du corps 50 de l'arbre 5 et fermé uniquement par le corps 50 de l'arbre 5. Dans ce cas, le corps 50 peut être obtenu par fabrication additive (impression 3D) ou être formé de deux parties tubulaires dont une des parties est emboîté dans l'autre. Dans ce dernier cas une des parties comprend un canal et l'autre le ferme de façon à former le conduit principal 22 ou le conduit principal est formé de deux canaux formés à la surface de chacune des parties tubulaires, le conduit étant formé et fermé par l'emboitement d'une des parties dans l'autre.

Dans une autre variante, le conduit principal est ménagé uniquement dans le module rotor 6 à partir d'un canal ménagé dans un premier corps solidaire de l'empilement radial de tôles du corps C6 du module rotor 6 et éventuellement à partir d'un autre canal ménagé dans un deuxième corps solidaire du premier corps.

Le canal ou les canaux à partir duquel (desquels) le conduit principal est formé est, par exemple, réalisé par usinage dans un corps. En variante, au moins un canal, à partir duquel le conduit principal est formé, est, par exemple, réalisé par impression 3D, par fonderie usinée par électroérosion ou par frittage.

En variante, au moins une portion du conduit principal 22 est ménagée entre la surface interne du module stator et la surface interne 62 du module rotor 6.

De façon générale, au moins une portion du conduit principal est entourée radialement par le module stator 7.

Le refroidissement additionnel apporté par cette solution est d'autant meilleure que le conduit fait circuler l'huile sur une grande distance autour du volume interne en rotation autour du volume interne 51 tangentiellement et/ou axialement.

Avantageusement, le conduit principal 22 est configuré pour faire circuler l'huile qu'il reçoit sur l'essentiel de la longueur du corps C6 du module rotor 6 et, de préférence, sur toute la longueur du corps C6 module rotor 6 selon l'axe x.

Dans la réalisation avantageuse des figures 4 et 5, le conduit principal 22 est un serpentin enroulé en spires autour du volume interne 51. Cette solution est avantageuse car elle permet de fournir une bonne surface d'échange entre l'huile et le module rotor 6. Par ailleurs, la température de l'huile conduite par le conduit augmente de façon monotone avec la distance qu'elle parcourt le long de l'axe longitudinal x par rapport à l'entrée du conduit principal. Elle ne génère pas d'importantes différences de température, plus gênantes, dans un même plan perpendiculaire à l'axe longitudinal au sein du module rotor 6. S'il existe un gradient de température en fonction de l'angle formé autour de l'axe x, un balourd mécanique peut être généré par des dilatations thermiques différentes du module rotor 6 autour de l'axe x.

De préférence, le conduit principal 22 est enroulé en hélice circulaire autour de l'axe x. L'axe de l'hélice étant l'axe longitudinal x. Par hélice circulaire, on entend une hélice inscrite dans un cylindre de révolution. Il est à noter que l'hélice n'est pas obligatoirement circulaire.

Avantageusement, le conduit 21 est configuré pour aspirer l'huile lors de la rotation de l'arbre 5 dans le sens de rotation prédéterminé. Le conduit 21 agit alors comme une pompe qui aspire une partie de l'huile injectée par la pompe 10 dans le volume interne 50.

Avantageusement, le conduit 21 est configuré pour aspirer l'huile lors de la rotation de l'arbre 5 dans le sens de rotation prédéterminé, de façon que le débit d'huile aspiré par le conduit 21 augmente de façon monotone sur toute la plage de vitesse de rotation de fonctionnement du dispositif. La plage de vitesse de rotation de fonctionnement du dispositif est la plage de vitesse de rotation dans laquelle l'arbre 5 est destiné à tourner pour que le dispositif de transformation alimente une charge ou un réseau en énergie électrique. Cela permet d'obtenir une influence progressive du conduit 21 sur toute la plage de vitesse de fonctionnement et donc de réguler les débits d'huile dans les gicleurs 52, 53, 54, 55 sur toute la plage de vitesse de fonctionnement.

A cet effet, lorsque le conduit principal 22 est enroulé en hélice circulaire autour de l'axe x, l'hélice est avantageusement dextre lorsque l'arbre 5 tourne autour de l'axe longitudinal dans le sens horaire vue de la position E2 de l'arbre de la machine. La position E2 est située de l'autre côté de l'hélice par rapport à la position E1, de l'arbre de la machine L'hélice tourne vers la droite lorsque l'arbre 5 tourne autour de l'axe longitudinal dans le sens horaire vue de la position E2 de l'arbre de la machine, selon l'axe x, (à droite sur la figure) en direction de laquelle est injectée l'huile dans le volume interne 51. L'huile est injectée au niveau de la première position E1 de l'arbre, selon l'axe, dans la réalisation non limitative de la figure 3, vers la position E2. Si le sens de rotation de l'arbre est antihoraire vue de la position E2 vers E1, ou si l'huile est injectée dans le sens de la position E2 vers la position E1 et la rotation de l'arbre est horaire vue de E2, alors l'hélice est senestre. Elle monte dans le sens des aiguilles d'une montre.

La configuration du conduit principal 22 pour obtenir l'aspiration par effet d'hélice lorsque l'arbre 5 tourne le sens de rotation prédéterminé permet d'obtenir une augmentation du débit d'huile aspiré avec la vitesse. Cette augmentation peut, par exemple, être monotone. L'aspiration par le conduit 21, étant fonction de la vitesse de rotation de l'arbre, il est possible, en ajustant correctement les paramètres géométriques du conduit, d'agir sur le débit d'huile sortant de l'ensemble de gicleurs 52 à 55, sur toute la plage de vitesse de rotation de fonctionnement.

A l'inverse, si, pour ajuster les débits des gicleurs 52 à 55, il est nécessaire de limiter l'aspiration dans l'hélice aux vitesses élevées (par exemple si les forces centrifuges deviennent trop importantes, par exemple dans le cas d'une machine de grand diamètre et/ou de vitesse de rotation élevée), il suffit d'inverser le sens de rotation de l'hélice afin d'obtenir l'effet inverse.

Le réglage du pas d'hélice permet de jouer sur l'aspiration du conduit 21. Le réglage de la section de l'hélice et des caractéristiques géométriques du canal d'entrée 22 et du canal de sortie 23 permettent de régler les pertes de charge du conduit.

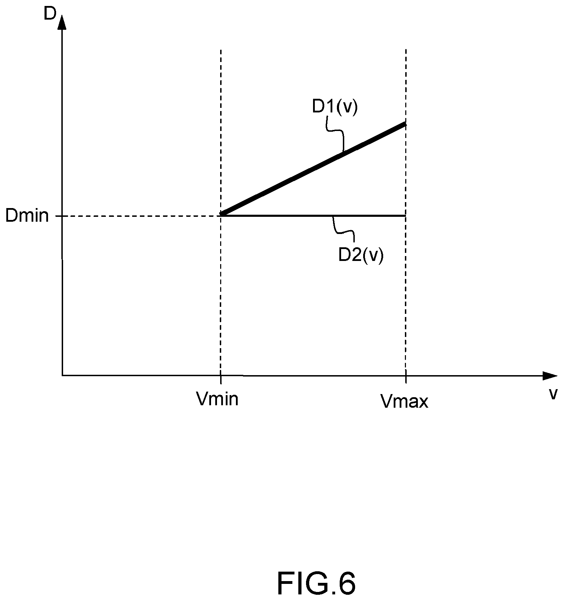

La figure 6 représente, en trait épais, un débit d'huile D1 (v) sortant de l'ensemble des gicleurs 52 à 55 en fonction de la vitesse angulaire v de l'arbre (5), lorsque le dispositif de transformation est dépourvu du dispositif de régulation d'huile. Le débit d'huile D(v) présente une valeur minimale Dmin pour la vitesse minimale Vmin de la plage de vitesse de fonctionnement PV. Le débit augmente linéairement avec la vitesse, sur la plage de vitesse de fonctionnant allant jusqu'à Vmax, du fait de l'augmentation du débit injectée par la pompe dans le volume interne 50 avec la vitesse.

La courbe en trait fin représente un exemple de débit d'huile D2(v) sortant de l'ensemble des gicleurs 52 à 55 en fonction de la vitesse lorsque le dispositif selon l'invention comprend le circuit de régulation selon l'invention et le conduit est calibré de façon à absorber tout le surplus de débit d'huile injecté par la pompe 10 dans le volume interne 50, au-delà du débit minimal lorsque la vitesse dépasse la vitesse minimale Vmin, jusqu'à la vitesse maximale Vmax.

De façon générale, les caractéristiques géométriques du conduit 21 sont définies de façon qu'il absorbe tout ou partie du surplus du débit d'huile injecté par la pompe 10 dans le volume interne 50, au-delà du débit minimal Dmin entre la vitesse minimale et la vitesse maximale.

Avantageusement, les caractéristiques géométriques du conduit 21 sont définies de façon que l'augmentation du débit sortant de l'ensemble de gicleurs due à une augmentation de la vitesse de rotation de l'arbre, est sensiblement nulle ou plus faible qu'en l'absence du circuit de régulation, sur toute la plage de vitesse de rotation s'étendant de Vmin à Vmax. Il est à noter qu'une augmentation du débit sortant de l'ensemble de gicleurs sensiblement nulle correspond à un débit sortant de l'ensemble de gicleurs constant.

En variante, les caractéristiques géométriques du conduit 21 sont définies de façon que l'augmentation du débit sortant de l'ensemble de gicleurs due à une augmentation de la vitesse de rotation de l'arbre soit plus faible qu'en l'absence du circuit de régulation, au moins à une vitesse de fonctionnement s'étendant Vmin à Vmax et sans que le débit ne dépasse le débit sortant de l'ensemble de gicleurs en l'absence du circuit de régulation sur toute la plage de vitesse de fonctionnement.

Il est à noter que les caractéristiques géométriques du conduit 21 peuvent être définies de façon que le débit sortant de l'ensemble de gicleurs diminue sur une sous plage de vitesse comprise dans la plage de vitesse de fonctionnement ou sur toute la plage de vitesse de fonctionnement. En variante, les caractéristiques géométriques du conduit 21 peuvent être définies de façon que le débit sortant de l'ensemble de gicleurs soit sensiblement constant entre Vmin et une vitesse intermédiaire et augmente à partir de la vitesse intermédiaire. Les caractéristiques géométriques du conduit 21 sont adaptées en fonction du besoin.

Toutes les courbes de débit comprises entre D2(v) et D1 (v) peuvent être obtenues. Il est même possible d'obtenir une courbe de débit présentant au moins une portion inférieure ou égale à D2(v).

La solution proposée permet donc de limiter le brouillard d'huile, en régulant le débit d'huile pulvérisé par les gicleurs 52 à 55 sur toute la plage de vitesse de fonctionnement de la machine.

Les caractéristiques géométriques du conduit sont, par exemple, définies en utilisant une méthode des éléments finis pour calculer les différents débits au sein du dispositif de transformation d'énergie. Les paramètres géométriques du conduit sont réglés par itération jusqu'à obtenir une courbe de débit d'huile prédéterminée en sortie de l'ensemble de gicleurs sur une plage de vitesse prédéterminée pour une courbe de débit d'huile prédéterminée fourni par une pompe en entrée de l'arbre 5 sur la plage de vitesse prédéterminée et pour des caractéristiques géométriques des gicleurs prédéterminées. En variante, la définition des caractéristiques géométriques de du conduit pourrait être réalisée en procédant à des modélisations par calcul analytique, ou encore par un mode expérimental itératif.

Dans la réalisation des figures, la section de l'hélice est rectangulaire est identique sur toute la longueur de l'hélice.

Ce mode de réalisation n'est pas limitatif. La section du conduit peut, par exemple être en U, c'est-à-dire rectangulaire avec deux sommets adjacents arrondis, ou circulaire ou présenter une autre forme de courbe plane fermée.

En variante, la forme de la section de l'hélice et/ou la dimension de la section et/ou le pas de l'hélice et/ou le sens de l'hélice évolue le long de l'hélice, c'est-à-dire le long de l'arbre. Il est, par exemple, possible de passer d'une hélice dextre à une hélice senestre.

Dans la réalisation des figues 4 et 5 le conduit principal 22 est hélicoïdal. En variante, le conduit principal s'étend linéairement selon l'axe x. En variante, le conduit principal comprend des portions de conduit s'étendant sensiblement linéairement selon l'axe x et réparties angulairement autour de l'axe x. Les portions de conduit sont reliées par des conduits courbes, par exemple en U. Dans ces cas, le conduit n'assure plus d'aspiration par effet d'hélice. En revanche, la limitation de l'augmentation du débit dans les gicleurs avec l'augmentation de la vitesse de rotation de l'arbre est obtenue par la force centrifuge.

Avantageusement, une section de sortie du conduit présente une aire plus grande qu'une section d'entrée du conduit. Cette solution permet de mieux expulser l'huile par force centrifuge. Toutefois, cette caractéristique n'est pas obligatoire.

Dans la réalisation des figures 4 et 5, le dispositif de transformation d'énergie comprend un unique dispositif de régulation. En variante, il comprend plusieurs circuits de régulation et donc plusieurs conduits pouvant présenter la même forme ou des formes différentes. Le dispositif de régulation peut par exemple comprendre plusieurs conduits en hélices.

Plusieurs circuits de régulation ou conduits peuvent partager un même dispositif d'évacuation ou les dispositifs d'évacuation des différents conduits sont distincts.

Dans la réalisation des figures, l'arbre comprend un corps 50 délimitant le volume interne 51 dans lequel est injectée l'huile. Le volume interne 51 est libre. Autrement dit, le volume interne est destiné à être entièrement rempli d'huile lors du fonctionnement du dispositif. Le conduit peut être entièrement rempli d'huile ou être rempli d'huile et d'air lors du fonctionnement du dispositif.

En variante, le volume interne 51 comprend un corps interne creux ou plein complètement entouré radialement par le corps 50. Le volume interne 51 comprend également un volume libre destiné à recevoir l'huile lors du fonctionnement du dispositif. Ce volume libre peut comprendre un volume entouré par le corps interne et/ou un volume tubulaire entourant radialement le corps interne et entouré radialement par le corps 50.

Dans la réalisation des figures, l'entrée du conduit 21 est située en amont d'une partie des entrées des gicleurs selon l'axe x et la sortie du conduit est située en aval des entrées des gicleurs selon l'axe x. En variante, l'entrée d'au moins un gicleur est située en amont de l'entrée du conduit 21 et/ou l'entrée d'au moins gicleur est située en aval de la sortie du conduit 21.

## Revendications

1. Dispositif de transformation d'énergie (1) apte à produire de l'électricité à partir d'une énergie mécanique et/ou inversement, le dispositif de transformation d'énergie comprenant :
- un carter (2),
- un arbre (5) comprenant un corps (50) définissant un volume interne (51), l'arbre étant destiné à tourner dans un sens prédéterminé autour d'un axe longitudinal (x) par rapport au carter (2) sur une plage de vitesse de rotation prédéterminée,
- un module rotor (6) solidaire de l'arbre (5),
- un module stator (7) solidaire du carter (2), le module rotor (6) et le module stator (7) comprenant un inducteur et un induit couplés magnétiquement entre eux, le carter (2) délimitant un volume interne logeant le module rotor et le module stator et comprenant une cavité (3) entourant le module rotor (6) et le module stator (7),
- un ensemble d'au moins un gicleur (52, 53, 54, 55) traversant le corps (50) et assurant une communication fluidique entre le volume interne (51) et la cavité (3), l'ensemble d'au moins un gicleur (52, 53, 54, 55) étant configuré pour former un brouillard d'huile dans la cavité (3) sous l'effet de la rotation de l'arbre (5) dans la plage de vitesse de rotation, à partir d'une partie d'une huile injectée dans le volume interne (51) de l'arbre creux (5), le brouillard d'huile étant destiné à venir en contact physique direct avec le module rotor (6) et le module stator (7),
- un ensemble d'au moins un circuit de régulation configuré pour limiter une augmentation du débit d'huile, passant du volume interne (51) à la cavité (3) au travers de l'ensemble d'au moins un gicleur (52, 53, 54, 55), ladite augmentation étant due à une augmentation du débit d'huile injecté dans le volume interne (51), le circuit de régulation comprenant :
- un conduit (21) solidaire de l'arbre (5) et comprenant une entrée communiquant avec le volume interne (51) de sorte à recevoir, sous l'effet de la rotation de l'arbre (5), une autre partie de l'huile injectée dans le volume interne (51), le conduit (21) conduisant l'autre partie de l'huile jusqu'à une sortie du conduit (21),
- un dispositif d'évacuation configuré pour évacuer au moins une partie de l'huile sortant du conduit (21) dans un réservoir d'huile (9) sans contribuer au brouillard d'huile

2. Dispositif de transformation d'énergie selon la revendication précédente, comprenant une pompe de circulation d'huile (10) configurée pour prélever l'huile dans le réservoir d'huile (9) et l'injecter dans le volume interne (51) de l'arbre (5), la pompe (10) étant couplée mécaniquement à l'arbre (5) de façon à être entraînée en rotation par l'arbre (5) de sorte qu'un débit d'huile injecté par la pompe (5) dans le volume interne (51) augmente lors d'une augmentation de la vitesse de rotation de l'arbre (5) dans le sens de rotation.

3. Dispositif de transformation d'énergie selon l'une quelconque des revendications précédentes, dans lequel le conduit (21) comprend un conduit principal (22) entouré radialement par le module stator (7) et configuré pour conduire l'huile qu'il reçoit, lors de la rotation de l'arbre (5), en translation par rapport à l'arbre (5) selon l'axe longitudinal (x) et/ou en rotation par rapport au corps de l'arbre (5) autour de l'axe longitudinal (x), autour du volume interne (51).

4. Dispositif de transformation d'énergie selon la revendication précédente, dans lequel le conduit principal (22) du conduit d'un circuit de régulation est ménagé dans le corps (50) de l'arbre (5) et est fermé par le module rotor (6).

5. Dispositif de transformation d'énergie selon l'une quelconque des revendications 3 à 4, dans lequel le conduit principal du conduit (21) d'un circuit de régulation est enroulé en hélice autour de l'axe longitudinal (x) et configuré pour aspirer l'huile en entrée du conduit principal lors de la rotation de l'arbre (5).

6. Dispositif de transformation d'énergie selon la revendication précédente et selon la revendication 2, dans lequel des caractéristiques géométriques du conduit (21) sont définies de façon que le conduit (21) véhicule tout ou partie d'un surplus du débit d'huile injecté par la pompe (10) dans le volume interne (50), au-delà d'un débit minimal, sur toute la plage de vitesse de rotation.

7. Dispositif de transformation d'énergie selon l'une quelconque des revendications précédentes, dans lequel le dispositif d'évacuation comprend un capot de collecte (31) disposé dans la cavité (3) et étant fixe par rapport au carter (2), le capot de collecte (31) entourant radialement une sortie (25) du conduit (21) de sorte à collecter au moins une partie de l'huile sortant du conduit (21) sous l'effet de la force centrifuge, lors de la rotation de l'arbre (5) dans le sens de rotation.

8. Dispositif de transformation d'énergie selon la revendication précédente, dans lequel le dispositif d'évacuation comprend une ouverture d'évacuation (32) située en regard du réservoir d'huile (9) et permettant d'évacuer l'huile collectée par le capot (31), par gravité, vers le réservoir d'huile (9).

9. Dispositif de transformation d'énergie selon l'une quelconque des revendications 7 à 8, dans lequel le capot de collecte (31) comprend une bague (B) entourant complètement radialement la sortie (25) et étant configurée de façon à permettre de retenir radialement et, axialement dans les deux sens, l'huile sortant du conduit (31), une ouverture étant ménagée dans la bague (B) en regard du réservoir d'huile (9).

10. Dispositif de transformation d'énergie selon la revendication précédente, dans lequel la bague de collecte (B) est munie d'un tuyau d'évacuation (T) présentant une entrée entourant l'ouverture et s'étendant jusqu'à l'ouverture d'évacuation (32).

11. Dispositif de transformation d'énergie selon l'une quelconque des revendications précédentes, dans lequel le conduit est configuré pour limiter une augmentation du débit d'huile, passant du volume interne (51) à la cavité (3) au travers de l'ensemble d'au moins un gicleur (52, 53, 54, 55), ladite augmentation étant due à une augmentation du débit d'huile injecté dans le volume interne (51).

## Patentansprüche

1. Energieumwandlungsvorrichtung (1), die imstande ist, aus einer mechanischen Energie Elektrizität und/oder umgekehrt zu erzeugen, wobei die Energieumwandlungsvorrichtung umfasst:
- ein Gehäuse (2),
- eine Welle (5), die einen Körper (50) umfasst, der ein Innenvolumen (51) definiert, wobei die Welle dazu bestimmt ist, sich in einer vorbestimmten Richtung um eine Längsachse (x) in Bezug zum Gehäuse (2) in einem vorbestimmten Drehzahlbereich zu drehen,
- ein mit der Welle (5) fest verbundenes Rotormodul (6),
- ein mit dem Gehäuse (2) fest verbundenes Statormodul (7), wobei das Rotormodul (6) und das Statormodul (7) einen Induktor und einen Anker umfasst, die magnetisch miteinander gekoppelt sind, wobei das Gehäuse (2) ein Innenvolumen begrenzt, welches das Rotormodul und das Statormodul unterbringt und einen Hohlraum (3) umfasst, der das Rotormodul (6) und das Statormodul (7) umgibt,
- eine Anordnung mit mindestens einer Düse (52, 53, 54, 55), die den Körper (50) durchquert, und für eine Fluidverbindung zwischen dem Innenvolumen (51) und dem Hohlraum (3) sorgt, wobei die Anordnung mit mindestens einer Düse (52, 53, 54, 55) konfiguriert ist, um einen Ölnebel im Hohlraum (3) unter der Wirkung der Drehung der Welle (5) im Drehzahlbereich, aus einem Teil eines Öls zu bilden, das in das Innenvolumen (51) der Hohlwelle (5) eingespritzt wird, wobei der Ölnebel dazu bestimmt ist, in direkten physischen Kontakt mit dem Rotormodul (6) und dem Statormodul (7) zu gelangen,
- eine Anordnung mit mindestens einem Regelkreis, der konfiguriert ist, um eine Erhöhung der Ölfließrate zu begrenzen, die vom Innenvolumen (51) zum Hohlraum (3) durch die Anordnung mit mindestens einer Düse (52, 53, 54, 55) verläuft, wobei die Erhöhung auf einer Erhöhung der eingespritzten Ölfließrate in das Innenvolumen (51) zurückzuführen ist, wobei der Regelkreis umfasst:
- eine Leitung (21), die fest mit der Welle (5) verbunden ist, und einen Eingang umfasst, der mit dem Innenvolumen (51) verbunden ist, um unter der Wirkung der Drehung der Welle (5) einen anderen Teil des in den Hohlraum (51) eingespritzten Öls aufzunehmen, wobei die Leitung (21) den anderen Teil des Öls bis zu einem Ausgang der Leitung (21) leitet,
- eine Austragsvorrichtung, die konfiguriert ist, um mindestens einen Teil des Öls auszutragen, das aus der Leitung (21) in ein Ölreservoir (9) austritt, ohne zum Ölnebel beizutragen

2. Energieumwandlungsvorrichtung nach dem vorstehenden Anspruch, umfassend eine Ölumlaufpumpe (10), die konfiguriert ist, um das Öl aus dem Ölreservoir (9) zu entnehmen, und es in das Innenvolumen (51) der Welle (5) einzuspritzen, wobei die Pumpe (10) mechanisch mit der Welle (5) gekoppelt ist, um von der Welle (5) in Drehung angetrieben zu werden, sodass sich eine durch die Pumpe (5) in das Innenvolumen (51) eingespritzte Ölfließrate bei einer Erhöhung der Drehzahl der Welle (5) in der Drehrichtung erhöht.

3. Energieumwandlungsvorrichtung nach einem der vorstehenden Ansprüche, wobei die Leitung (21) eine Hauptleitung (22) umfasst, die radial vom Statormodul (7) umgeben wird, und konfiguriert ist, um das Öl, das sie bei der Drehung der Welle (5) empfängt, translatorisch in Bezug zur Welle (5) entlang der Längsachse (x) und/oder drehend in Bezug auf den Wellenkörper (5) um die Längsachse (x), um das Innenvolumen (51) herum zu leiten.

4. Energieumwandlungsvorrichtung nach dem vorstehenden Anspruch, wobei die Hauptleitung (22) der Leitung eines Regelkreises im Körper (50) der Welle (5) vorgesehen ist und vom Rotormodul (6) verschlossen wird.

5. Energieumwandlungsvorrichtung nach einem der Ansprüche 3 bis 4, wobei die Hauptleitung der Leitung (21) eines Regelkreises schraubenförmig um die Längsachse (x) eingerollt ist, und konfiguriert ist, um das Öl am Eingang der Hauptleitung beim Drehen der Welle (5) anzusaugen.

6. Energieumwandlungsvorrichtung nach dem vorstehenden Anspruch und nach Anspruch 2, wobei geometrischen Eigenschaften der Leitung (21) definiert sind, sodass die Leitung (21) einen gesamten Überschuss der von der Pumpe (10) in das Innenvolumen (50) eingespritzten Ölfließrate oder einen Teil davon, über eine Mindestfließrate hinaus, über den gesamten Drehzahlbereich hinweg transportiert.

7. Energieumwandlungsvorrichtung nach einem der vorstehenden Ansprüche, wobei die Austragsvorrichtung eine Auffangabdeckung (31) umfasst, die in dem Hohlraum (3) angeordnet ist, und in Bezug auf das Gehäuse (2) feststehend ist, wobei die Auffangabdeckung (31) radial einen Ausgang (25) der Leitung (21) umgibt, um mindestens einen Teil des aus der Leitung (21) unter der Zentrifugalwirkung beim Drehen der Welle (5) in der Drehrichtung austretende Öl aufzufangen.

8. Energieumwandlungsvorrichtung nach dem vorstehenden Anspruch, wobei die Austragsvorrichtung eine Austragsöffnung (32) umfasst, die sich gegenüber dem Ölreservoir (9) befindet, und ermöglicht, das durch die Abdeckung (31) aufgefangene Öl durch Schwerkraft zum Ölreservoir (9) auszutragen.

9. Energieumwandlungsvorrichtung nach einem der Ansprüche 7 bis 8, wobei die Auffangabdeckung (31) einen Ring (B) umfasst, der den Ausgang (25) radial vollständig umgibt, und konfiguriert ist, um zu ermöglichen, radial und axial in den beiden Richtungen das aus der Leitung (31) austretende Öl zurückzuhalten, wobei im Ring (B) eine Öffnung gegenüber dem Ölreservoir (9) vorgesehen ist.

10. Energieumwandlungsvorrichtung nach dem vorstehenden Anspruch, wobei der Auffangring (B) mit einem Austragsrohr (T) versehen ist, das einen Eingang aufweist, der die Öffnung umgibt und sich bis zur Austragsöffnung (32) erstreckt.

11. Energieumwandlungsvorrichtung nach einem der vorstehenden Ansprüche, wobei die Leitung konfiguriert ist, um eine Erhöhung der Ölfließrate zu begrenzen, die vom Innenvolumen (51) zum Hohlraum (3) durch die Anordnung mit mindestens einer Düse (52, 53, 54, 55) verläuft, wobei die Erhöhung auf einer Erhöhung der eingespritzten Ölfließrate in das Innenvolumen (51) zurückzuführen ist.

## Claims

1. Energy conversion device (1) which is capable of producing electricity from mechanical energy and/or vice versa, the energy conversion device comprising:
- a housing (2),
- a shaft (5) comprising a body (50) which defines an inner volume (51), the shaft being intended to rotate in a predetermined direction about a longitudinal axis (x) relative to the housing (2) over a predetermined rotational speed range,
- a rotor module (6) which is fixedly joined to the shaft (5),
- a stator module (7) which is fixedly joined to the housing (2), the rotor module (6) and the stator module (7) comprising an inductor and an armature which are coupled magnetically to each other, the housing (2) delimiting an inner volume which accommodates the rotor module and the stator module and comprising a cavity (3) which surrounds the rotor module (6) and the stator module (7),
- an assembly of at least one nozzle (52, 53, 54, 55) which extends through the body (50) and ensures fluid communication between the inner volume (51) and the cavity (3), the assembly of at least one nozzle (52, 53, 54, 55) being configured to form an oil mist in the cavity (3) under the effect of the rotation of the shaft (5) in the rotational speed range, from a portion of an oil injected into the inner volume (51) of the hollow shaft (5), the oil mist being intended to come into direct physical contact with the rotor module (6) and the stator module (7),
- an assembly of at least one control circuit which is configured to limit an increase of the oil flow passing from the inner volume (51) to the cavity (3) through the assembly of at least one nozzle (52, 53, 54, 55), the increase being a result of an increase of the oil flow injected into the inner volume (51), the control circuit comprising:
- a conduit (21) which is fixedly joined to the shaft (5) and which comprises an input which communicates with the inner volume (51) in order to receive under the effect of the rotation of the shaft (5), another portion of the oil injected into the inner volume (51), the conduit (21) leading the other portion of the oil up to an output of the conduit (21),
- a discharge device which is configured to discharge at least a portion of the oil leaving the conduit (21) into an oil tank (9) without contributing to the oil mist.

2. Energy conversion device according to the preceding claim, comprising an oil circulation pump (10) which is configured to remove oil from the oil tank (9) and to inject it into the inner volume (51) of the shaft (5), the pump (10) being coupled mechanically to the shaft (5) in order to be driven in rotation by the shaft (5) so that an oil flow injected by the pump (5) into the inner volume (51) increases when the rotational speed of the shaft (5) increases in the rotation direction.

3. Energy conversion device according to either of the preceding claims, wherein the conduit (21) comprises a main conduit (22) which is surrounded radially by the stator module (7) and which is configured to guide the oil which it receives, during the rotation of the shaft (5), in translation relative to the shaft (5) along the longitudinal axis (x) and/or in rotation relative to the body of the shaft (5) about the longitudinal axis (x), about the inner volume (51).

4. Energy conversion device according to the preceding claim, wherein the main conduit (22) of the conduit of a control circuit is provided in the body (50) of the shaft (5) and is closed by the rotor module (6).

5. Energy conversion device according to either claim 3 or 4, wherein the main conduit of the conduit (21) of a control circuit is wound in a helical manner around the longitudinal axis (x) and is configured to draw in oil at the input of the main conduit during the rotation of the shaft (5).

6. Energy conversion device according to the preceding claim and according to claim 2, wherein the geometric characteristics of the conduit (21) are defined so that the conduit (21) conveys all or some of a surplus of the oil flow injected by the pump (10) into the inner volume (50) beyond a minimum flow rate, over the entire rotational speed range.

7. Energy conversion device according to any one of the preceding claims, wherein the discharge device comprises a collection hood (31) which is arranged in the cavity (3) and which is fixed relative to the housing (2), the collection hood (31) radially surrounding an outlet (25) of the conduit (21) in order to collect at least a portion of the oil leaving the conduit (21) under the effect of the centrifugal force during the rotation of the shaft (5) in the rotation direction.

8. Energy conversion device according to the preceding claim, wherein the discharge device comprises a discharge opening (32) which is located opposite the oil tank (9) and which enables the oil collected by the hood (31) to be discharged, by means of gravity, to the oil tank (9).

9. Energy conversion device according to either claim 7 or 8, wherein the collection hood (31) comprises a ring (B) which radially completely surrounds the outlet (25) and which is configured so as to retain radially and axially in two directions the oil leaving the conduit (31), an opening being provided in the ring (B) opposite the oil tank (9).

10. Energy conversion device according to the preceding claim, wherein the collection ring (B) is provided with a discharge pipe (T) which has an input which surrounds the opening and which extends up to the discharge opening (32).

11. - Energy conversion device according to any one of the preceding claims, wherein the conduit is configured to limit an increase of the oil flow which passes from the inner volume (51) to the cavity (3) through the assembly of at least one nozzle (52, 53, 54, 55), the increase being a result of an increase of the oil flow injected into the inner volume (51).
